# EUROPÄISCHE PATENTANMELDUNG

(11) **EP 3 151 077 A1**
(43) Veröffentlichungstag der Anmeldung: **05.04.2017**
(21) Anmeldenummer: 15187594.5
(22) Anmeldetag: 30.09.2015
(51) Int. Cl.: G05B 23/02

(54) **VERFAHREN ZUR BESTIMMUNG VON DIAGNOSEMUSTERN FÜR ZEITREIHEN EINES TECHNISCHEN SYSTEMS UND DIAGNOSEVERFAHREN**

(71) Anmelder: Siemens Aktiengesellschaft, 80333 München (DE)
(72) Erfinder: Grimm, Stephan, 81825 München (DE); Guennemann, Stephan, 80336 München (DE)

(57) **Zusammenfassung**

Die Erfindung betrifft ein Verfahren zur Bestimmung von Diagnosemustern für Zeitreihen eines technischen Systems und ein Diagnoseverfahren.

Bei dem Verfahren zur Bestimmung eines oder mehrerer Diagnosemuster/s für Zeitreihen eines technischen Systems zwecks Diagnose eines Ereignisses werden
zunächst ein oder mehrere Diagnosemuster angesetzt und
- in einem ersten Schritt mögliche Erweiterungen des oder der Diagnosemuster bestimmt,
- in einem zweiten Schritt für jede Erweiterung des oder je eines der Diagnosemuster eine Menge an Sequenzen aus den Zeitreihen bestimmt, in welchem die Erweiterung enthalten ist,
- in einem dritten Schritt für jede Sequenz dieser Menge geprüft, ob die Sequenz mit den Ereignis in Verbindung steht oder nicht und
- in einem vierten Schritt diejenige/n Erweiterung/en, für welche das Verhältnis der Anzahl von Sequenzen der Menge, die mit dem Ereignis in Verbindung stehen und der Anzahl von Sequenzen der Menge am größten ist, als neue/s Diagnosemuster angesetzt.

## Beschreibung

Die Erfindung betrifft ein Verfahren zur Bestimmung von Diagnosemustern für Zeitreihen eines technischen Systems und ein Diagnoseverfahren.

Beim Betrieb von komplexen technischen Systemen, beispielsweise von automatisierten Produktionssystemen oder Zügen, liefern häufig zahlreiche Sensoren große Mengen an Zeitreihen, welche zur automatisierten Datenanalyse zur Verfügung stehen. Solche Zeitreihen weisen typischerweise die Form von Sequenzen von Tupeln auf, welche beispielsweise mit einem Zeitstempel versehen sind und etwa Sensormessungen, Werksprotokolle oder Diagnosemeldungen enthalten.

Die einzelnen Elemente der Zeitreihen sind deshalb Tupel, weil mehrere Eigenschaften zu einem Zeitpunkt der Zeitreihe zusammentreffen können. Beispielsweise können mehrere zeitgleich eintretende Ereignisse ein Tupel bilden.

Regelmäßig stellt sich die Aufgabe, bestimmte Muster in solchen Zeitreihen zu finden. Insbesondere sind häufig Diagnosemuster erwünscht, deren Auftreten auf bestimmte, insbesondere momentane, Eigenschaften des technischen Systems hinweisen. Solche Eigenschaften können etwa durch den Ausfall einer Systemkomponente gebildet sein. Eine Datenanalyse kann in solchen Fällen hilfreich sein, Ausfälle frühzeitig zu erkennen oder vorherzusagen.

Es ist daher Aufgabe der Erfindung, ein Verfahren zur Bestimmung von Diagnosemustern für Zeitreihen zu schaffen, mittels welchem eines oder mehrere Eigenschaften des technischen Systems leicht erkannt werden können.

Ferner ist es Aufgabe der Erfindung, ein Diagnoseverfahren zur Diagnose von Eigenschaften des technischen Systems bereitzustellen.

Diese Aufgabe der Erfindung wird mit einem Verfahren mit den in Anspruch 1 angegebenen Merkmalen sowie mit einem Diagnoseverfahren mit den in Anspruch 8 angegebenen Merkmalen gelöst. Bevorzugte Weiterbildungen der Erfindung sind in der zugehörigen Unteransprüchen, der nachfolgenden Beschreibung und der Zeichnung angegeben.

Bei dem erfindungsgemäßen Verfahren zur Bestimmung eines oder mehrerer Dignosemuster/s für Zeitreihen eines technischen Systems zwecks Diagnose eines Ereignisses, werden zunächst ein oder mehrere Diagnosemuster angesetzt und es werden
- in einem ersten Schritt mögliche Erweiterungen des oder der Diagnosemuster bestimmt,
- in einem zweiten Schritt für jede Erweiterung des oder je eines der Diagnosemuster eine Menge an Sequenzen aus den Zeitreihen bestimmt, in welchem die Erweiterung enthalten ist,
- in einem dritten Schritt für jede Sequenz dieser Menge geprüft, ob die Sequenz mit den Ereignis in Verbindung steht oder nicht und
- in einem vierten Schritt diejenige/n Erweiterung/en, für welche das Verhältnis der Anzahl von Sequenzen der Menge, die mit dem Ereignis in Verbindung stehen und der Anzahl von Sequenzen der Menge am größten ist, als neue/s Diagnosemuster angesetzt.

Auf diese Weise werden solche Sequenzen herangezogen, welche bereits zuvor gewissermaßen als einschlägig betrachtet wurden. Entsprechend wird mit verfeinerten Diagnosemustern ein jedenfalls vorab viel versprechend erscheinender Suchraum gezielt durchsucht.

In einer bevorzugten Weiterbildung des Verfahrens gemäß der Erfindung werden der erste, zweite, dritte und vierte Schritt ein- oder mehrfach wiederholt. Iterativ wird so ein immer ausgefeilteres Diagnosemuster oder ein Satz von Diagnosemustern erhalten.

Vorzugsweise sind bei dem erfindungsgemäßen Verfahren die Zeitreihe oder Zeitreihen, das oder die Diagnosemuster sowie die Sequenz oder Sequenzen Abfolgen von Elementen in Form von Tupeln. Diese Weiterbildung der Erfindung trägt dem Umstand Rechnung, dass Zeitreihen beispielsweise den zeitlichen Eintritt von Ereignissen angeben können. So können etwa mehrere Ereignisse zur selben Zeit auftreten, was geeigneterweise mit einem Tupel abgebildet wird.

Zweckmäßig wird ein Diagnosemuster erweitert, indem ein letztes Element angehängt wird oder ein weiterer Eintrag zu einem letzten Tupel zugefügt wird. Diese Art der Diagnosemustererzeugung ist vollständig und leicht zählbar.

Geeigneterweise ist bei dem Verfahren gemäß der Erfindung ein Diagnosemuster dann in einer Sequenz enthalten, wenn die aufeinanderfolgenden Tupel des Diagnosemusters in richtiger relativer Abfolge aufeinander zumindest Bestandteile von Tupeln der Sequenz sind, wobei ein maximaler Abstand zwischen aufeinanderfolgenden Tupeln des Musters innerhalb der Sequenz nicht überschritten wird. Diese Art des *"Matchings"* sei an einem Beispiel näher erläutert:
Ein Diagnosemuster
*P* = ({*a*} → {*b, c*}) ist in der Sequenz
*S₁* = ({*c*} → {*a*, *b*} → {*b, c*}) (mit maximalem Abstand "*0*") und in der Sequenz
*S₃ = ({a*, *e}* → *{d}* → *{e}* → *{b*, *c, d})* (mit maximalem Abstand "2") enthalten, nicht jedoch in der Sequenz
*S₂* = ({b} → {a, b} → {c}) enthalten.

Vorzugsweise steht bei dem erfindungsgemäßen Verfahren nach einem der vorhergehenden Ansprüche dem Eintrag eines Tupels des Diagnosemusters ein Oberbegriff dieses Eintrags gleich. Auf diese Weise kann ein Diagnosemuster mit Oberbegriffen herangezogen werden, um eine Mehrzahl konkreter Diagnosemuster abzudecken.

Zweckmäßig umfasst etwa ein Eintrag im Tupel des Diagnosemusters *"Bremse"* in einer Sequenz die Elemente "hydraulische Bremse" oder "mechanische Bremse", sodass sich der Eintrag "Bremse" in der Sequenz wiederfindet.

Zweckmäßig werden bei dem erfindungsgemäßen Verfahren die Erweiterungen des oder der Diagnosemuster in einer baumartigen Struktur entwickelt, wobei der Baum nach einer Breadth-First-Suche durchsucht wird. Auf diese Weise lässt sich das etablierte Beam-Search-Verfahren anwenden. Gemäß diesem Verfahren wird an jede Stufe der baumartigen Struktur der Suchraum innerhalb der infrage kommenden Diagnosemuster durch den vierten Schritt des erfindungsgemäßen Verfahrens wie oben beschrieben auf den jeweils interessant erscheinenden Bereich konzentriert.

Bei dem erfindungsgemäßen Diagnoseverfahren wird oder werden ein oder mehrere Diagnosemuster nach einem Verfahren nach einem der vorhergehenden Ansprüche bestimmt, wobei dieses eine oder die mehreren Diagnosemuster herangezogen wird oder werden, um eine Diagnose von Eigenschaften des technischen Systems zu erkennen.

Nachfolgend wird die Erfindung anhand eines in der Zeichnung dargestellten Ausführungsbeispiels näher erläutert.

Die einzige Zeichnungsfigur zeigt einen Algorithmus zur Ausführung des Verfahrens schematisch in einem Pseudocode.

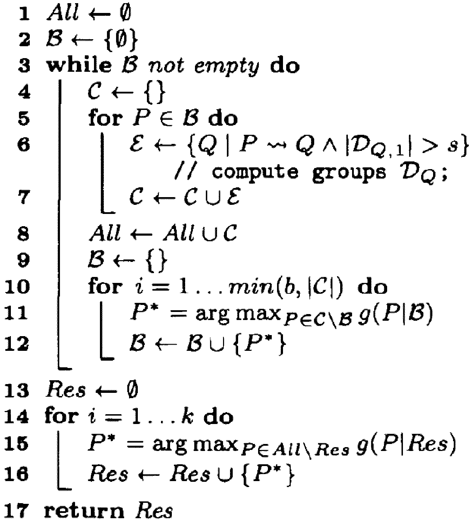

Der in Fig. 1 dargestellte Pseudocode nutzt als Eingangsgrößen zunächst einen Satz von Eingangssequenzen, eine Markierfunktion 1, die Zahl der Diagnosemuster k sowie die minimale Größe s einer Sequenz. Als Ausgangsgröße wird ein Satz von Diagnosemustern erhalten. Der dargestellte Algorithmus lässt sich beispielsweise verwenden, um Diagnosemuster zu generieren, mittels welchem Zugausfälle frühzeitig erkannt oder sogar vorhergesagt werden können.

Zunächst werden in Zeile 1 alle generierten Muster buchgehalten. Nachfolgend wird (Zeile 2) mit einem leeren Diagnosemuster gestartet. Die nachfolgende While-Schleife generiert Kandidaten für den nächsten *"Beam"* (des *"Beam*-*Search"*-Verfahrens). Für jeden Kandidanten in dem *"Beam"* wird das Diagnosemuster mittels der For-Schleife erweitert und die Monotonität genutzt. Mittels der zweiten For-Schleife wird der nächste Beam konstruiert.

Schließlich liefert der Algorithmus als Resultat die besten k Diagnosemuster als Ausgangswert.

## Patentansprüche

1. Verfahren zur Bestimmung eines oder mehrerer Diagnosemuster/s für Zeitreihen eines technischen Systems zwecks Diagnose eines Ereignisses, bei welchem
zunächst ein oder mehrere Diagnosemuster angesetzt werden und
- in einem ersten Schritt mögliche Erweiterungen des oder der Diagnosemuster bestimmt werden,
- in einem zweiten Schritt für jede Erweiterung des oder je eines der Diagnosemuster eine Menge an Sequenzen aus den Zeitreihen bestimmt wird, in welchem die Erweiterung enthalten ist,
- in einem dritten Schritt für jede Sequenz dieser Menge geprüft wird, ob die Sequenz mit den Ereignis in Verbindung steht oder nicht und
- in einem vierten Schritt diejenige/n Erweiterung/en, für welche das Verhältnis der Anzahl von Sequenzen der Menge, die mit dem Ereignis in Verbindung stehen und der Anzahl von Sequenzen der Menge am größten ist, als neue/s Diagnosemuster angesetzt werden.

2. Verfahren nach Anspruch 1, bei welchem der erste bis vierte Schritt ein- oder mehrfach wiederholt werden.

3. Verfahren nach einem der vorhergehenden Ansprüche, bei welchem die Zeitreihe oder Zeitreihen, das oder die Diagnosemuster sowie die Sequenz oder Sequenzen Abfolgen von Elementen in Form von Tupeln sind.

4. Verfahren nach einem der vorhergehenden Ansprüche, bei welchem ein Muster dann in einer Sequenz enthalten ist, wenn aufeinanderfolgende Tupel des Musters in richtiger relativer Abfolge zumindest Bestandteile von Tupeln der Sequenz sind, wobei ein maximaler Abstand zwischen aufeinanderfolgenden Tupeln des Musters innerhalb der Sequenz nicht überschritten wird.

5. Verfahren nach einem der vorhergehenden Ansprüche, bei welchem einem Eintrag eines Tupels des Diagnosemusters ein Oberbegriff dieses Eintrags gleichsteht.

6. Verfahren nach einem der vorhergehenden Ansprüche, bei welchem die Erweiterungen des oder der Diagnosemuster in einer baumartigen Struktur entwickelt werden, wobei der Baum nach einer Breadth-First-Suche durchsucht wird.

7. Verfahren nach einem der vorhergehenden Ansprüche, bei welchem ein Diagnosemuster erweitert wird, indem ein letztes Element angehängt wird oder ein weiterer Eintrag zu einem letzten Tupel zugefügt wird.

8. Diagnoseverfahren, bei welchem ein oder mehrere Diagnosemuster nach einem Verfahren nach einem der vorhergehenden Ansprüche bestimmt wird, wobei dieses eine oder die mehreren Diagnosemuster herangezogen wird oder werden, um eine Diagnose von Eigenschaften des technischen Systems zu erkennen.
